# EUROPÄISCHE PATENTSCHRIFT

(11) **EP 4 412 881 B1**
(45) Veröffentlichungstag und Bekanntmachung des Hinweises auf die Patenterteilung: **29.04.2026**
(21) Anmeldenummer: 22770011.9
(22) Anmeldetag: 01.09.2022
(51) Int. Cl.: B60W 30/18, B60W 40/076, B60W 30/10

(54) **VERFAHREN ZUM MANÖVRIEREN EINES FAHRZEUGS AUF EINER MEHRSPURIGEN STRASSE UNTER BERÜCKSICHTIGUNG EINER STEIGUNG IN EINEM BEREICH EINER AUSFAHRT DER STRASSE, FAHRERASSISTENZSYSTEM SOWIE FAHRZEUG**
METHOD FOR MANEUVERING A VEHICLE ON A MULTI-LANE ROAD WHILE TAKING INTO ACCOUNT A GRADIENT IN A REGION OF AN EXIT OF THE ROAD, DRIVER ASSISTANCE SYSTEM, AND VEHICLE
PROCÉDÉ DE MANOEUVRE D'UN VÉHICULE SUR UNE ROUTE À PLUSIEURS VOIES TOUT EN TENANT COMPTE D'UNE PENTE DANS UNE RÉGION D'UNE SORTIE DE LA ROUTE, SYSTÈME D'ASSISTANCE AU CONDUCTEUR ET VÉHICULE

(30) Priorität: 04.10.2021 DE 102021125693
(43) Veröffentlichungstag der Anmeldung: 14.08.2024
(73) Patentinhaber: Bayerische Motoren Werke Aktiengesellschaft, 80809 München (DE)
(72) Erfinder: NIERMANN, Stephan, 85241 Hebertshausen (DE); FAYAD, Sami, 81369 München (DE); RIETH, Dominik, 80992 München (DE)
(86) Internationale Anmeldenummer: PCT/EP2022/074333
(87) Internationale Veröffentlichungsnummer: WO 2023/057137

(56) Entgegenhaltungen:
- WO-A1-2019/122952
- DE-A1- 102018 221 862
- DE-A1- 102019 128 910
- US-A1- 2018 037 223
- US-A1- 2021 300 377

## Beschreibung

Die vorliegende Erfindung betrifft ein Verfahren zum Manövrieren eines Fahrzeugs auf einer mehrspurigen Straße. Darüber hinaus betrifft die vorliegende Erfindung ein Fahrerassistenzsystem. Schließlich betrifft die vorliegende Erfindung ein Fahrzeug mit einem derartigen Fahrerassistenzsystem.

Aus dem Stand der Technik sind Fahrerassistenzsysteme zum Durchführen von (teil-) automatisierten Spurwechseln bzw. Spurwechselassistenzsysteme bekannt. Bei diesen Fahrerassistenzsystemen mit automatisierter bzw. automatischer Spurwechselfunktion zeigt der Fahrer typischerweise durch eine bestimmte Bedienhandlung einen Spurwechsel an. Wenn eine solche Bedienhandlung erkannt wird, wird mittels des Fahrerassistenzsystems das Fahrzeug entlang einer geplanten Trajektorie auf den benachbarten Fahrstreifen bzw. die Nebenspur mit automatischer Querführung und im Allgemeinen auch mit automatischer Längsführung manövriert. Bei derartigen Fahrerassistenzsystemen wird üblicherweise der fahrerseitige Spurwechselwunsch durch das Betätigen eines entsprechenden Bedienelements, beispielsweise eines Blinkerhebels, zum Aktivieren von außerhalb des Fahrzeugs sichtbaren Fahrtrichtungsanzeigern signalisiert.

Bekannte Fahrerassistenzsysteme bzw. Spurwechselassistenzsysteme überwachen im Allgemeinen vor dem Spurwechsel durch eine geeignete Umfeldsensorik das Umfeld des Fahrzeugs, insbesondere den umliegenden Verkehr. Auf die Bedienhandlung des Fahrers hin kann dann der Fahrstreifen gewechselt werden, falls auf dem benachbarten Fahrstreifen bzw. der Zielspur eine freie Lücke für das eigene Fahrzeug erkannt wurde.

Darüber hinaus sind aus dem Stand der Technik Fahrerassistenzsysteme bekannt, welche einen Fahrer bzw. Nutzer eines Fahrzeugs auf einer mehrspurigen Straße bei einem Erreichen einer Ausfahrt unterstützen. Dabei kann das Fahrerassistenzsystem beispielsweise infolge einer Eingabe von einem Navigationsziel alle notwendigen Spurwechsel bis zum Erreichen der Ausfahrt vorbereiten. Hierzu kann das Fahrerassistenzsystem zunächst eine freie Lücke für das Fahrzeug auf der Zielspur erkennen und anschließend die Geschwindigkeit des Fahrzeugs für den nachfolgenden Spurwechsel in die erkannte Lücke anpassen. Der Spurwechsel selbst kann dann mittels eines Spurwechselassistenzsystems durchgeführt werden, wobei das Spurwechselassistenzsystem automatisch oder nach einer Bedieneingabe durch den Nutzer ausgelöst wird.

Bei einem hohen Verkehrsaufkommen und somit gegebenenfalls nicht vorhandenen Lücken auf dem benachbarten Fahrstreifen können derartige Fahrerassistenzsysteme an ihre Grenzen stoßen.

In diesem Zusammenhang offenbart die US 2021/300377 A1 eine Fahrzeugsteuerungsvorrichtung, welche einen Spurwechsel-Steuerabschnitt umfasst. Der Spurwechsel-Steuerabschnitt kann das Benutzerfahrzeug dazu veranlassen, einen Spurwechsel auf eine andere Spur oder auch einen mehrfachen Spurwechsel zu ermöglichen.

Ferner beschreibt die WO 2019/122952 A1 ein Verfahren zur personalisierten Bewegungsplanung in autonom fahrenden Fahrzeugen. Für die Bewegungsplanung können Umgebungsdaten, welche auch die Steigung der Fahrbahn beschreiben können, berücksichtigt werden.

Außerdem zeigt die US 2018/037223 A1 Systeme zur Unterstützung des autonomen Fahrens. Auf der Grundlage des aktuellen Standorts des Fahrzeugs und des Straßenverlaufs der Straße können Steuerinhalte einer ersten autonomen Fahrsteuerung, die dafür sorgt, dass das Fahrzeug ohne Abweichung von der Spur fährt, und einer zweiten autonomen Fahrsteuerung, die die Geschwindigkeit des Fahrzeugs entsprechend dem Straßenverlauf regelt, festgelegt werden. Zudem kann die Steigung der Straße berücksichtigt werden.

Zudem offenbart die DE 10 2019 128910 A1 ein Fahrassistenzsystem für ein Fahrzeug. Das Fahrassistenzsystem umfasst eine Erkennungseinheit, die eingerichtet ist, um ein bevorstehendes Ausfahrtmanöver von einer Fahrbahn mit einer Kurvenfahrt zu erkennen; und eine Steuereinheit, die eingerichtet ist, um basierend auf wenigstens einem Streckenparameter und wenigstens einem Fahrzeugparameter einen Zeitpunkt und/oder eine Position für einen Beginn eines Ausrollens des Fahrzeugs zu bestimmen, so dass eine Geschwindigkeit des Fahrzeugs zu Beginn der Kurvenfahrt gleich einem ersten Schwellwert ist und am Ende der Kurvenfahrt gleich einem zweiten Schwellwert ist, wobei der erste Schwellwert größer als der zweite Schwellwert ist.

Es ist Aufgabe der vorliegenden Erfindung, eine Lösung aufzuzeigen, wie ein Betrieb eines Fahrerassistenzsystems der eingangs genannten Art verbessert werden kann. Darüber hinaus soll ein Fahrzeug mit einem entsprechenden Fahrerassistenzsystem bereitgestellt werden.

Diese Aufgabe wird erfindungsgemäß durch ein Verfahren, durch ein Fahrerassistenzsystem sowie durch ein Fahrzeug mit den Merkmalen gemäß den unabhängigen Ansprüchen gelöst. Vorteilhafte Weiterbildungen der vorliegenden Erfindung sind in den abhängigen Ansprüchen angegeben.

Ein erfindungsgemäßes Verfahren gemäß Anspruch 1 dient zum Manövrieren eines Fahrzeugs auf einer mehrspurigen Straße. Das Verfahren umfasst das Empfangen eines Fahrbefehls zum Manövrieren des Fahrzeugs von einem ersten Fahrstreifen der Straße über einen zweiten Fahrstreifen der Straße auf eine Ausfahrt der Straße. Außerdem umfasst das Verfahren das Vorbereiten eines Spurwechselmanövers von dem ersten Fahrstreifen auf den zweiten Fahrstreifen, wobei für das Vorbereiten des Spurwechselmanövers eine Geschwindigkeit des Fahrzeugs angepasst wird. Ferner umfasst das Verfahren das Bestimmen einer Steigung der Straße in einem Bereich der Ausfahrt und das Anpassen des Vorbereitens bzw. der Vorbereitung des Spurwechselmanövers in Abhängigkeit von der bestimmten Steigung.

Mit Hilfe des Verfahrens soll ein Fahrer bzw. Nutzer des Fahrzeugs beim Manövrieren des Fahrzeugs auf der mehrspurigen Straße unterstützt werden. Bei der Straße kann es sich grundsätzlich um eine Fernstraße, eine Bundesstraße, eine Schnellstraße, eine autobahnähnliche Straße oder dergleichen handeln. Bevorzugt handelt es sich bei der Straße aber um eine Autobahn. Die Straße kann beispielsweise zwei Richtungsfahrbahnen mit jeweils zumindest zwei Fahrstreifen aufweisen. Auf diesen Fahrstreifen können sich das eigene Fahrzeug und auch weiteren Verkehrsteilnehmer in eine vorgegebene Fahrtrichtung bewegen. Die Straße kann zumindest den ersten Fahrstreifen und den zweiten Fahrstreifen aufweisen. Dabei kann der zweite Fahrstreifen an die Ausfahrt bzw. einen Verzögerungsstreifen, welcher zu der Ausfahrt führt, angrenzen. Der zweite Fahrstreifen kann beispielsweise die rechte Spur einer Autobahn sein.

Mittels des Fahrerassistenzsystems wird der Fahrbefehl empfangen, welcher beschreibt, dass das Fahrzeug ausgehend von dem ersten Fahrstreifen über den zweiten Fahrstreifen auf die Ausfahrt der Straße manövriert werden soll. Mit anderen Worten soll also zunächst ein Spurwechsel von dem ersten Fahrstreifen auf den zweiten Fahrstreifen durchgeführt werden und anschließend soll das Fahrzeug die Straße über die Ausfahrt verlassen. Dabei kann der Fahrbefehl durch eine Routenführung bzw. ein Navigationssystem des Fahrzeugs vorgegeben werden. Alternativ oder zusätzlich kann der Fahrbefehl auch durch eine entsprechende Bedieneingabe von dem Fahrer begründet sein.

Mit Hilfe des Fahrerassistenzsystems kann der Spurwechsel von dem ersten Fahrstreifen auf den zweiten Fahrstreifen vorbereitet werden. Hierzu kann zunächst mit entsprechenden Abstandssensoren bzw. Umfeldsensoren des Fahrerassistenzsystems nach freien Lücken für das Fahrzeug auf dem zweiten Fahrstreifen gesucht werden. Zudem kann mittels des Fahrerassistenzsystems die Geschwindigkeit des Fahrzeugs angepasst werden bzw. in die Längsführung eingegriffen werden. Insbesondere kann die Geschwindigkeit des Fahrzeugs verringert werden bzw. an die Geschwindigkeit der weiteren Verkehrsteilnehmer auf der Zielspur bzw. dem zweiten Fahrstreifen angepasst werden. Die Geschwindigkeit des Fahrzeugs kann so angepasst werden, dass eine Lücke in der Zielspur verfolgt wird. Im Anschluss daran kann dann das zumindest teilautomatisierte Spurwechselmanöver mittels eines Spurwechselassistenten durchgeführt werden. Je nach länderspezifischer Vorgabe kann der Spurwechselassistent automatisch durch das Fahrerassistenzsystem oder infolge einer Bedieneingabe durch den Nutzer initiiert werden. Im zweiten Fall kann beispielsweise auf Höhe der Lücke der Hinweis "Spurwechsel auslösen, um Route zu folgen" an den Nutzer ausgegeben werden.

Grundsätzlich kann also für das Einleiten des automatisierten Spurwechselmanövers eine entsprechende Strategie vorgegeben sein. Diese Strategie kann beispielsweise vorgeben, ab welchem Zeitpunkt bzw. ab welchem Abstand zu der Ausfahrt mit der Lückensuche begonnen wird. Zudem kann die Strategie beschreiben, ab welchem Zeitpunkt bzw. ab welchem Abstand zur Ausfahrt die Geschwindigkeit angepasst wird. Zudem kann die Strategie die Ausgabe der Hinweise an den Fahrer beschreiben.

Gemäß der vorliegenden Erfindung ist nun vorgesehen, dass die Steigung der Straße in dem Bereich der Ausfahrt bestimmt wird. Dies bedeutet, dass die Steigung der Straße in der unmittelbaren bzw. direkten Umgebung der Ausfahrt ermittelt wird. Alternativ oder zusätzlich kann es auch vorgesehen sein, dass die Steigung in einem definierten Streckenabschnitt vor der Ausfahrt bestimmt wird. Darüber hinaus ist es vorgesehen, dass die Strategie für das Einleiten des automatisierten Spurwechselmanövers in Abhängigkeit von der bestimmten Steigung angepasst wird.

Die Steigung im Bereich der Ausfahrt kann auf Grundlage von digitalen Kartendaten ermittelt werden. Diese digitalen Kartendaten können die Steigung im Bereich der Ausfahrt und/oder in einem Bereich vor der Ausfahrt beschreiben. Alternativ oder zusätzlich können die Daten von zumindest einem Umfeldsensor des Fahrzeugs herangezogen werden, um die Steigung im Bereich der Ausfahrt bestimmen zu können.

Bei der vorliegenden Erfindung wird berücksichtigt, dass bei verhältnismäßig großen Steigungen die anderen Verkehrsteilnehmer bzw. Fahrzeuge auf dem zweiten Fahrstreifen sich oftmals mit einer geringen Geschwindigkeit fortbewegen. Zudem wurde beobachtet, dass diese Fahrzeuge, welche sich auf dem zweiten Fahrstreifen befinden, kleine Lücken bzw. geringe Abstände zueinander aufweisen. Um diesem hohen Verkehrsaufkommen und den sich damit ergebenden Herausforderungen bei dem Spurwechselmanöver von dem ersten Fahrstreifen auf den zweiten Fahrstreifen zu begegnen, wird vorliegend die Strategie für die Vorbereitung des Spurwechselmanövers an die Steigung angepasst. Somit kann beispielsweise das automatisierte Spurwechselmanöver im Vergleich zu Straßen mit einer sehr geringen Steigung im Bereich der Ausfahrt früher eingeleitet werden. Das Anpassen des Vorbereitens des Spurwechselmanövers kann alternativ oder zusätzlich umfassen, dass ein Geschwindigkeitsprofil angepasst wird. Beispielsweise kann beim Annähern des Fahrzeugs an die Ausfahrt das Geschwindigkeitsprofil nach unten hin angepasst werden. Insgesamt kann somit im Vergleich zu bekannten Fahrerassistenzsystemen, bei denen niedrige Geschwindigkeiten von Verkehrsteilnehmern auf dem zweiten Fahrstreifen vor der Ausfahrt erst berücksichtigt werden, wenn diese durch die Umfeldsensorik erfasst werden, zuverlässiger durchgeführt werden.

Bei dem Einleiten des Spurwechselmanövers wird eine Lücke zwischen weiteren Verkehrsteilnehmern auf dem zweiten Fahrstreifen gesucht und ein Abstand zu der Ausfahrt, ab welchem die Suche gestartet wird, wird in Abhängigkeit von der bestimmten Steigung angepasst. Des Weiteren kann der Abstand zu der Ausfahrt, ab welchem die Suche gestartet wird, in Abhängigkeit von dem Verkehrsaufkommen und/oder dem Vorhandensein von Lastkraftwagen angepasst werden. Mit anderen Worten kann also der Startzeitpunkt für die Lückensuche an die Steigung in dem Bereich der Ausfahrt angepasst werden. Hierbei kann grundsätzlich angenommen werden, dass die Lückensuche umso früher gestartet wird, umso größer die Steigung und/oder je höher das Verkehrsaufkommen im Bereich der Ausfahrt bzw. vor der Ausfahrt ist. Somit kann beispielsweise garantiert werden, dass der Spurwechsel von dem ersten Fahrstreifen auf den zweiten Fahrstreifen erfolgreich durchgeführt wird und somit das Fahrzeug die mehrspurige Straße über die Ausfahrt verlassen kann.

Bevorzugt wird eine Verkehrsdichte und/oder ein Vorhandensein von Lastkraftwagen auf dem zweiten Fahrstreifen bestimmt und das Vorbereiten des Spurwechselmanövers wird in Abhängigkeit der Verkehrsdichte und/oder des Vorhandenseins der Lastkraftwagen angepasst. Auf Grundlage von Daten der Umfeldsensoren des Fahrerassistenzsystems und/oder anhand von Verkehrsdaten kann eine Verkehrsdichte auf der Straße bzw. auf dem rechten Fahrstreifen der Straße bestimmt werden. Insbesondere kann die Verkehrsdichte in dem Bereich der Ausfahrt bzw. in einem Bereich vor der Ausfahrt ermittelt werden. Alternativ oder zusätzlich kann ein Vorhandensein von Lastkraftwagen auf Grundlage der Daten der Umfeldsensoren ermittelt werden. Ferner kann vorgesehen sein, dass das Vorhandensein von Lastkraftwagen anhand des aktuellen Wochentags und/oder der aktuellen Uhrzeit abgeschätzt wird. Hierbei kann beispielsweise ein Fahrverbot für Lastkraftwagen an bestimmten Wochentagen berücksichtigt werden. Außerdem kann berücksichtigt werden, dass das Vorhandensein von Lastkraftwagen in Abhängigkeit von der Uhrzeit bzw. Tageszeit variiert. Die Strategie für das Einleiten des automatisierten Spurwechselmanövers kann nun zusätzlich anhand der Verkehrsdichte und/oder des Vorhandenseins der Lastkraftwagen angepasst werden. Insbesondere bedeutet dies, dass das automatisierte Spurwechselmanöver umso früher eingeleitet wird, je höher die Verkehrsdichte ist bzw. umso mehr Lastkraftwagen auf dem zweiten Fahrstreifen vorhanden sind.

In einer weiteren Ausführungsform wird beim Vorbereiten des Spurwechselmanövers die Geschwindigkeit des Fahrzeugs auf eine Zielgeschwindigkeit reduziert, wobei die Zielgeschwindigkeit und/oder ein Abstand zu der Ausfahrt, ab welchem die Zielgeschwindigkeit erreicht wird, in Abhängigkeit von der bestimmten Steigung angepasst wird. Zudem kann es vorgesehen sein, dass die Zielgeschwindigkeit und/oder ein Abstand zu der Ausfahrt, ab welchem die Zielgeschwindigkeit erreicht wird, in Abhängigkeit von der Verkehrsdichte und/oder dem Vorhandensein der Lastkraftwagen angepasst wird. Wie eingangs beschrieben, kann zum Einleiten bzw. zur Vorbereitung des automatisierten Spurwechselmanövers die Geschwindigkeit bzw. Längsgeschwindigkeit des Fahrzeugs reduziert werden bzw. an die weiteren Verkehrsteilnehmer auf dem zweiten Fahrstreifen angepasst werden. Zudem kann für die Bewegung des Fahrzeugs ein Geschwindigkeitsprofil und/oder ein Geschwindigkeitsverlauf vorgegeben sein, welches bzw. welcher dann auf Grundlage der Steigung angepasst wird. Wenn nun beispielsweise auf Grundlage der erfassten Steigung im Bereich der Ausfahrt mit einem hohen Verkehrsaufkommen zu rechnen ist, kann der Abstand, ab welchem die Zielgeschwindigkeit zu erreichen ist, vergrößert werden. Grundsätzlich kann die Zielgeschwindigkeit derart bestimmt werden, dass eine Differenz zwischen der Zielgeschwindigkeit und der Geschwindigkeit der weiteren Verkehrsteilnehmer auf dem zweiten Fahrstreifen nicht zu groß ist bzw. einen vorbestimmten Schwellenwert nicht überschreitet. Auf diese Weise kann die Verkehrssicherheit gewährleitstet werden.

Grundsätzlich kann der Abstand, ab welchem die Längsgeschwindigkeit des Fahrzeugs reduziert wird, geschwindigkeitsabhängig bestimmt werden. Insbesondere kann der Abstand mit zunehmender Steigung vergrößert werden. In gleicher Weise kann der Wert der Zielgeschwindigkeit selbst an die Steigung angepasst werden. Beispielsweise kann mit zunehmender Steigung die Zielgeschwindigkeit reduziert werden, da anzunehmen ist, dass sich die weiteren Verkehrsteilnehmer, insbesondere Lastkraftwagen, auf dem zweiten Fahrstreifen mit einer verhältnismäßig geringen Geschwindigkeit bewegen werden. Durch die rechtzeitige Anpassung der Zielgeschwindigkeit kann der Betrieb des Fahrerassistenzsystems verbessert werden.

Weiterhin ist vorteilhaft, wenn die Geschwindigkeit in mehreren Stufen reduziert wird und die Stufen in Abhängigkeit von der bestimmten Steigung angepasst werden. Zudem können diese Stufen in Abhängigkeit von dem Verkehrsaufkommen und/oder dem Vorhandensein von Lastkraftwagen angepasst werden. Es kann also auch vorgesehen sein, dass das Fahrerassistenzsystem die Längsgeschwindigkeit des Fahrzeugs in mehreren Stufen reduziert, um den automatisierten Spurwechsel einzuleiten bzw. vorzubereiten. Dies gilt insbesondere für den Fall, dass vor dem Spurwechsel von dem ersten Fahrstreifen auf den zweiten Fahrstreifen noch zumindest ein weiteres Spurwechselmanöver durchgeführt wird. Für die jeweiligen Stufen können hierbei unterschiedliche Zielgeschwindigkeiten definiert sein. Dabei können diese Zielgeschwindigkeiten - wie zuvor beschrieben - an die bestimmte Steigung angepasst werden. Darüber hinaus kann auch die Anzahl der Stufen, in denen die Geschwindigkeit reduziert wird, an die bestimmte Steigung angepasst werden. Beispielsweise kann die Anzahl der Stufen mit zunehmender Steigung erhöht werden. Durch die stufenweise Reduzierung der Geschwindigkeit kann eine abrupte Reduzierung der Längsgeschwindigkeit durch das eigene Fahrzeug verhindert werden und somit die Sicherheit im Straßenverkehr gewährleistet werden.

In einer weiteren Ausführungsform wird bei dem Vorbereiten des Spurwechselmanövers zumindest ein Hinweis an einen Nutzer des Fahrzeugs ausgegeben, wobei die Ausgabe des zumindest einen Hinweises in Abhängigkeit von der bestimmten Steigung angepasst wird. Zudem kann vorgesehen sein, dass der zumindest eine Hinweis in Abhängigkeit von der Verkehrsdichte und/oder dem Vorhandensein von Lastkraftwagen angepasst wird. Je nach Ausgestaltung des Fahrerassistenzsystems bzw. je nach länderspezifischer Vorgabe kann ein entsprechender Hinweis an den Nutzer bzw. Fahrer ausgegeben werden. Beispielsweise kann der Nutzer dazu aufgefordert werden, das automatisierte Spurwechselmanöver auszulösen bzw. zu initiieren. Grundsätzlich kann auch vorgesehen sein, dass der Hinweis beschreibt, dass das Spurwechselmanöver automatisiert von dem Fahrerassistenzsystem durchgeführt wird oder dass der Fahrer das Spurwechselmanöver manuell durchführen soll. Grundsätzlich können diese Hinweise optisch, akustisch und/oder haptisch an den Nutzer bzw. Fahrer ausgegeben werden. Hierbei können auch entsprechende Eskalationsstufen vorgesehen sein, mit denen Hinweise an den Fahrer ausgegeben wird. Beispielsweise kann zunächst ein optischer Hinweis vorgesehen sein und in einer weiteren Eskalationsstufe kann zusätzlich ein akustischer Hinweis ausgegeben werden. In Abhängigkeit von der bestimmten Steigung können also diese Eskalationsstufen früher hochgesetzt werden, um solche automatisierten Spurwechselmanöver zu ermöglichen. Es kann zudem vorgesehen sein, dass als zusätzliche Eskalationsstufe der Fahrer dazu aufgefordert wird, das Fahrzeug manuell auf die Ausfahrt zu manövrieren, falls absehbar ist, dass das Fahrzeug nicht mehr mittels des Fahrerassistenzsystems auf die Ausfahrt manövriert werden kann.

Zudem kann der Abstand zu der Ausfahrt, ab welchem das Spurwechselmanöver durchgeführt wird, in Abhängigkeit von der bestimmten Steigung angepasst werden. Wenn das Spurwechselmanöver zumindest teilautomatisiert durchgeführt wird, kann dieses mit zunehmender Steigung und/oder mit zunehmendem Verkehrsaufkommen früher durchgeführt werden. Je größer die Steigung im Bereich der Ausfahrt also ist und/oder umso höher das Verkehrsaufkommen im Bereich der Ausfahrt ist, umso größer ist der Abstand zu der Ausfahrt, ab welchem das Spurwechselmanöver durchgeführt wird.

In einer weiteren Ausgestaltung wird das Vorbereiten des Spurwechselmanövers in Abhängigkeit von einem bekannten Fahrverhalten des Fahrers bzw. des Nutzers des Fahrzeugs angepasst. Dabei kann das Fahrverhalten des Nutzers beispielsweise beschreiben, ob der Fahrer bzw. Nutzer bei dem manuellen Fahren mit dem Fahrzeug eher sportlich oder eher komfortabel bzw. zurückhaltend agiert. Dieses bekannte Fahrverhalten kann während des manuellen Betriebs des Fahrzeugs auf bekannte Weise erfasst werden. Dabei kann nun die Strategie für das Einleiten des automatisierten Spurwechselmanövers zusätzlich an das Fahrverhalten des Nutzers angepasst werden. Bei einem eher sportlichen Fahrer kann somit beispielsweise die Anpassung der Geschwindigkeit zu einem späteren Zeitpunkt erfolgen oder es kann ein höherer Wert für die Geschwindigkeit bzw. die Zielgeschwindigkeit gewählt werden. Bei einem sportlichen Fahrer kann auch der Spurwechsel zu einem späteren Zeitpunkt durchgeführt werden. Somit kann das Fahrzeug noch mit einer höheren Geschwindigkeit auf dem ersten Fahrstreifen bewegt werden. Im Vergleich hierzu kann bei einem vorsichtigen Fahrer das Einleiten des automatisierten Spurwechselmanövers grundsätzlich früher durchgeführt werden. Hierbei kann dann auch beispielsweise das Fahrzeug mit einer verhältnismäßig geringen Geschwindigkeit auf der zweiten Fahrspur bis hin zu Ausfahrt manövriert werden. Auf diese Weise kann der Betrieb des Fahrerassistenzsystems an das Fahrverhalten des Nutzers angepasst werden. Dabei kann das Fahrerassistenzsystems auch unterschiedliche Einstellung für verschiedene Nutzer verwenden.

Es kann zudem vorgesehen sein, dass vor dem Spurwechsel von dem ersten Fahrstreifen auf den zweiten Fahrsteifen zumindest ein weiterer Spurwechsel vorbereitet und anschließend durchgeführt wird. Auch die Strategie für die Vorbereitung und/oder Durchführung von diesem zumindest einen weiteren Spurwechsel kann in Abhängigkeit von der Steigung und/oder dem Verkehrsaufkommen im Bereich der Ausfahrt angepasst werden.

Ein erfindungsgemäßes Fahrerassistenzsystem für ein Fahrzeug gemäß Anspruch 7 ist zum Durchführen des erfindungsgemäßen Verfahrens und der vorteilhaften Ausgestaltungen davon eingerichtet. Das Fahrerassistenzsystem kann zumindest einen Umfeldsensor aufweisen, mit welchem die weiteren Verkehrsteilnehmer in der Umgebung des Fahrzeugs und insbesondere auf den benachbarten Fahrstreifen erfasst werden können. Darüber hinaus kann das Fahrerassistenzsystem bzw. eine entsprechende Recheneinrichtung des Fahrerassistenzsystems auf Grundlage der Daten des zumindest einen Umfeldsensors die Steigung im Bereich der Ausfahrt bestimmen. Zudem kann das Fahrerassistenzsystem eine entsprechende Kommunikationseinrichtung aufweisen, über welche entsprechende Kartendaten und/oder Verkehrsdaten empfangen werden können. Diese Verkehrsdaten können insbesondere den Verkehrsfluss bzw. das aktuelle Verkehrsaufkommen beschreiben. Die Kartendaten und/oder die Verkehrsdaten können von einem Backend oder dergleichen empfangen werden. Auch auf Grundlage dieser Kartendaten und/oder Verkehrsdaten kann die Steigung im Bereich der Ausfahrt ermittelt werden. Die Recheneinrichtung kann durch zumindest ein elektronisches Steuergerät gebildet sein. Grundsätzlich kann die Recheneinrichtung zumindest einen Prozessor und einen Speicher aufweisen. Auf diesem Speicher können auch digitale Karten gespeichert sein. Mittels der Recheneinrichtung kann dann auch die Strategie für das Einleiten des automatisierten Fahrmanövers angepasst werden.

Mittels der Recheneinrichtung kann zudem eine Trajektorie für das Manövrieren des Fahrzeugs bzw. für das automatisierte Spurwechselmanöver berechnet werden. Außerdem kann die Recheneinrichtung dazu ausgebildet sein, ein Steuersignal zum Ansteuern einer Lenkung bzw. eines Lenksystems des Fahrzeugs auszugeben. Durch die Ansteuerung der Lenkung kann die Querführung des Fahrzeugs bei dem Spurwechselmanöver übernommen werden. Es kann auch vorgesehen sein, dass mittels des Fahrerassistenzsystems die Längsführung des Fahrzeugs während des Spurwechselmanövers oder während der Vorbereitung des Spurwechselmanövers übernommen wird.

Ein erfindungsgemäßes Fahrzeug gemäß Anspruch 8 umfasst das erfindungsgemäße Fahrerassistenzsystem.

Das Fahrzeug ist insbesondere als Personenkraftwagen ausgebildet.

Die mit Bezug auf das erfindungsgemäße Verfahren vorgestellten bevorzugten Ausführungsformen und deren Vorteile gelten entsprechend für das erfindungsgemäße Fahrerassistenzsystem sowie für das erfindungsgemäße Fahrzeug.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Erfindung wird nun anhand von bevorzugten Ausführungsbeispielen sowie unter Bezugnahme auf die beigefügten Zeichnungen näher erläutert. Dabei zeigen:
- Fig. 1: eine schematische Darstellung eines Fahrzeugs, welches ein Fahrerassistenzsystem zum Durchführen eines automatisierten Spurwechselmanövers aufweist; und
- Fig. 2: das Fahrzeug gemäß Fig. 1 an einer Verkehrssituation, wobei sich das Fahrzeug auf einer mehrspurigen Straße befindet und ein Manöver ausgehend von einem ersten Fahrstreifen der Straße zu einer Ausfahrt der Straße geplant ist.

In den Figuren werden gleiche oder funktionsgleiche Elemente mit dem gleichen Bezugszeichen versehen.

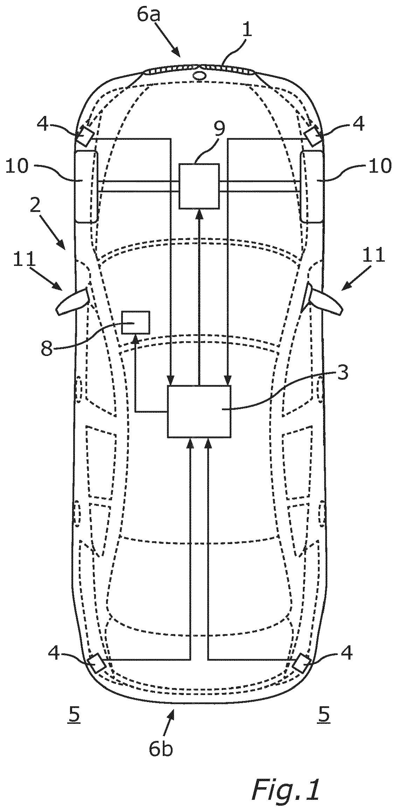

Fig. 1 zeigt ein Fahrzeug 1, welches vorliegend als Personenkraftwagen ausgebildet ist, in einer Draufsicht. Das Fahrzeug 1 umfasst ein Fahrerassistenzsystem 2, mittels welchem der Fahrer beim Manövrieren auf einer mehrspurigen Straße 11 unterstützt werden kann. Das Fahrzeug 2 umfasst eine Recheneinrichtung 3, welche beispielsweise zumindest ein elektronisches Steuergerät umfassen kann. Insbesondere kann die Recheneinrichtung 3 zumindest einen Prozessor und einen Speicher aufweisen.

Darüber hinaus umfasst das Fahrerassistenzsystem 2 zumindest einen Umfeldsensor 4. In dem vorliegenden Beispiel umfasst das Fahrerassistenzsystem 2 vier Umfeldsensoren 4, von denen zwei Umfeldsensoren 4 in einem Frontbereich 6a und zwei Umfeldsensoren 4 in einem Heckbereich 6b des Fahrzeugs 1 angeordnet sind. Dabei sind die Umfeldsensoren 4 bzw. Abstandssensoren in den jeweiligen Ecken des Fahrzeugs 1 angeordnet. Die Umfeldsensoren 4 können beispielsweise als Radarsensoren ausgebildet sein. Mit den Umfeldsensoren 4 können entsprechende Messungen durchgeführt werden, um Objekte und insbesondere weitere Verkehrsteilnehmer 7 in einer Umgebung 5 des Fahrzeugs 1 erfassen zu können.

Darüber hinaus ist die Recheneinrichtung 3 dazu eingerichtet, ein vorliegend nur schematisch dargestelltes Lenksystem 9 des Fahrzeugs 1 anzusteuern. Durch die Ansteuerung des Lenksystems 9 kann eine Querführung des Fahrzeugs 1 bei einem automatisierten Spurwechselmanöver übernommen werden. Durch die Ansteuerung des Lenksystems 9 können die lenkbaren Räder 10 des Fahrzeugs 1 gelenkt werden und somit die Querführung bei dem Spurwechselmanöver übernommen werden. Zudem ist es vorgesehen, dass mittels der Recheneinrichtung 3 ein Antriebsmotor und/oder Bremssystem des Fahrzeugs 1 angesteuert wird, um die Längsführung des Fahrzeugs 1 zu übernehmen. Auf diese Weise können die Spurwechselmanöver vorbereitet werden. Darüber hinaus umfasst das Fahrerassistenzsystem 2 eine Ausgabeeinrichtung 8, mittels welcher ein Hinweis an den Fahrer bzw. Nutzer des Fahrzeugs 1 ausgegeben werden kann.

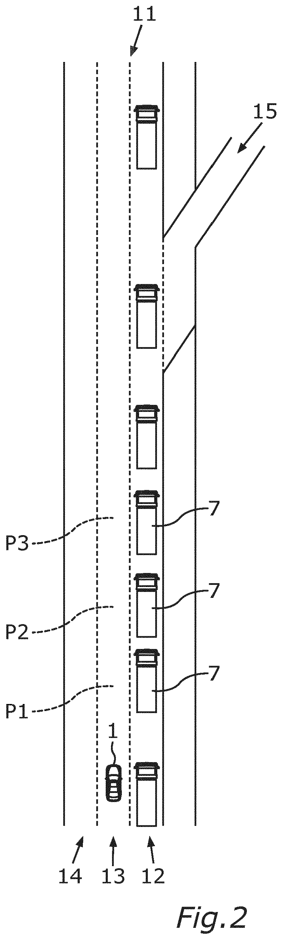

Fig. 2 zeigt in einer schematischen Darstellung eine Verkehrssituation, bei welcher sich das Fahrzeug 1 gemäß Fig. 1 auf einer mehrspurigen Straße 11 befindet. In dem vorliegenden Beispiel ist die Straße 11 als Autobahn ausgebildet. Die Straße 11 umfasst vorliegend einen ersten Fahrstreifen 13 bzw. eine mittlere Spur, einen zweiten Fahrstreifen 12 bzw. eine rechte Spur und einen dritten Fahrstreifen 14 bzw. eine linke Spur. Vorliegend befindet sich das Fahrzeug 1 auf dem ersten Fahrstreifen 13 bzw. der mittleren Spur. Dabei ist vorliegend vorgesehen, dass das Fahrzeug 1 von dem ersten Fahrstreifen 13 über den zweiten Fahrstreifen 12 zu einer Ausfahrt 15 der Straße 11 manövriert werden soll. Somit kann das Fahrzeug 1 beispielsweise einer vorgegebenen Navigationsroute folgen.

Zudem ist es vorgesehen, dass von dem ersten Fahrstreifen 13 auf den zweiten Fahrstreifen 12 ein automatisches Spurwechselmanöver durchgeführt wird. Das Einleiten bzw. das Vorbereiten dieses Spurwechselmanövers wird auf Grundlage einer vorbestimmten Strategie durchgeführt. In dieser Strategie kann beispielsweise hinterlegt sein, zu welchem Zeitpunkt bzw. ab welchem Abstand zu der Ausfahrt 15 eine Längsgeschwindigkeit des Fahrzeugs 1 für den Spurwechsel angepasst wird. Vorliegend wird definiert, ab welchem Abstand zu der Ausfahrt 15 mit einer Lückensuche zwischen weiteren Verkehrsteilnehmern 7 auf dem zweiten Fahrstreifen begonnen wird.

Vorliegend ist es zudem vorgesehen, dass eine Steigung der Straße 11 in einem Bereich der Ausfahrt 15 bestimmt wird. Um die Steigung bestimmen zu können, können Daten von den Umfeldsensoren 4 herangezogen werden. Darüber hinaus können die digitalen Kartendaten berücksichtigt werden. Zudem ist es vorgesehen, dass eine Verkehrsdichte und/oder ein Vorhandensein von Lastkraftwagen auf dem zweiten Fahrstreifen 12 bestimmt wird. In dem vorliegenden Beispiel befinden sich auf dem zweiten Fahrstreifen 12 mehrere Verkehrsteilnehmer 7 in Form von Lastkraftwagen. Dabei ist vorgesehen, dass die Strategie für das Einleiten des Spurwechselmanövers in Abhängigkeit von der Steigung im Bereich der Ausfahrt 15 und/oder auf Grundlage der Verkehrsdichte bzw. der Anzahl von Lastkraftwagen auf dem zweiten Fahrstreifen 12 angepasst wird.

Vorliegend wird davon ausgegangen, dass die Straße 11 im Bereich der Ausfahrt 15 eine vorbestimmte Steigung aufweist. In dem Beispiel befindet sich das Fahrzeug 1 auf dem ersten Fahrstreifen 13 bzw. der mittleren Spur. Bereits 1,5 km vor der Ausfahrt 15 werden Lastkraftwagen etwa alle 200 m erkannt. Hierbei ist vorgesehen, dass mittels des Fahrerassistenzsystems 2 bereits ab einem ersten Punkt P1, welcher beispielsweise einen Abstand von 1 km zu der Ausfahrt 15 aufweisen kann, die Längsgeschwindigkeit des Fahrzeugs 1 auf 100 km/h reduziert wird. Im weiteren Verlauf kann die Geschwindigkeit des Fahrzeugs 1 auf 80 km/h reduziert werden. Ab einem Punkt P2, welcher beispielsweise einen Abstand von 800 m zu der Ausfahrt 15 aufweisen kann, kann mit der Suche nach freien Lücken zwischen den weiteren Verkehrsteilnehmern 7 auf dem zweiten Fahrstreifen 12 begonnen werden. Zudem können die Hinweise, die an den Nutzer ausgegeben werden bzw. die Eskalationsstufe sukzessive erhöht werden. Ab einem dritten Punkt P3, welcher beispielsweise einen Abstand von 600 m zu der Ausfahrt aufweisen kann, kann dann die Geschwindigkeit des Fahrzeugs 1 weiter auf 60 km/h reduziert werden und der Spurwechsel hinter einem der Lastkraftwagen auf dem zweiten Fahrstreifen 12 durchgeführt werden. Im Anschluss kann dann das Fahrzeug über die Ausfahrt 15 von der Straße 11 bewegt werden.

Insgesamt kann somit der Betrieb des Fahrerassistenzsystems 2, insbesondere die Strategie für das Vorbereiten des automatisierten Spurwechselmanövers an die Steigung im Bereich der Ausfahrt 15 und/oder die Verkehrsdichte bzw. das Vorhandensein von Lastkraftwagen auf dem zweiten Fahrstreifen 12 bzw. der rechten Spur der Straße 11 angepasst werden.

## Patentansprüche

1. Verfahren zum Manövrieren eines Fahrzeugs (1) auf einer mehrspurigen Straße (11) mit den Schritten:
- Empfangen eines Fahrbefehls zum Manövrieren des Fahrzeugs (1) von einem ersten Fahrstreifen (13) der Straße (11) über einen zweiten Fahrstreifen (12) der Straße (11) auf eine Ausfahrt (15) der Straße (11),
- Vorbereiten eines Spurwechselmanövers von dem ersten Fahrstreifen (13) auf den zweiten Fahrstreifen (12),
- wobei für das Vorbereiten des Spurwechselmanövers eine Geschwindigkeit des Fahrzeugs (1) angepasst wird,
- Bestimmen einer Steigung der Straße in einem Bereich der Ausfahrt (15) und
- Anpassen des Vorbereitens des Spurwechselmanövers in Abhängigkeit von der bestimmten Steigung,
**dadurch gekennzeichnet, dass**
- bei dem Vorbereiten des Spurwechselmanövers eine Lücke zwischen weiteren Verkehrsteilnehmern (7) auf dem zweiten Fahrstreifen (12) gesucht wird und ein Abstand zu der Ausfahrt (15), ab welchem die Suche gestartet wird, in Abhängigkeit von der bestimmten Steigung angepasst wird.

2. Verfahren nach Anspruch 1,
**dadurch gekennzeichnet, dass**
eine Verkehrsdichte und/oder ein Vorhandensein von Lastkraftwagen auf dem zweiten Fahrstreifen (12) bestimmt wird und das Vorbereiten des Spurwechselmanövers in Abhängigkeit von der Verkehrsdichte und/oder des Vorhandenseins der Lastkraftwagen angepasst wird.

3. Verfahren nach Anspruch 1 oder 2,
**dadurch gekennzeichnet, dass**
bei dem Vorbereiten des Spurwechselmanövers die Geschwindigkeit des Fahrzeugs (1) auf eine Zielgeschwindigkeit reduziert wird, wobei die Zielgeschwindigkeit und/oder einen Abstand zu der Ausfahrt, ab welchem die Zielgeschwindigkeit erreicht wird, in Abhängigkeit von der bestimmten Steigung angepasst wird.

4. Verfahren nach Anspruch 3,
**dadurch gekennzeichnet, dass**
die Geschwindigkeit des Fahrzeugs (1) in mehreren Stufen reduziert wird und die Stufen in Abhängigkeit von der bestimmten Steigung angepasst werden.

5. Verfahren nach einem der vorhergehenden Ansprüche,
**dadurch gekennzeichnet, dass**
bei dem Vorbereiten des Spurwechselmanövers zumindest ein Hinweis an einen Nutzer des Fahrzeugs (1) ausgegeben wird, wobei die Ausgabe des zumindest einen Hinweises an die bestimmte Steigung angepasst wird.

6. Verfahren nach einem der vorhergehenden Ansprüche,
**dadurch gekennzeichnet, dass**
das Vorbereiten des Spurwechselmanövers in Abhängigkeit von einem bekannten Fahrverhalten des Nutzers des Fahrzeugs (1) angepasst wird.

7. Fahrerassistenzsystem (2) für ein Fahrzeugs (1), wobei das Fahrerassistenzsystem (2) zum Durchführen eines Verfahrens nach einem der vorhergehenden Ansprüche eingerichtet ist.

8. Fahrzeug (1), insbesondere Personenkraftwagen, umfassend ein Fahrerassistenzsystem (2) nach Anspruch 7.

## Claims

1. A method for maneuvering a vehicle (1) on a multi-lane road (11) with the steps:
- receiving a driving command for maneuvering the vehicle (1) from a first lane (13) of the road (11) via a second lane (12) of the road (11) to an exit (15) of the road (11),
- preparing a lane change maneuver from the first lane (13) to the second lane (12),
- wherein for preparing the lane change maneuver a speed of the vehicle (1) is adapted,
- determining a gradient of the road in a region of the exit (15) and
- adapting the preparation of the lane change maneuver in dependence on the determined gradient,
**characterized in that**
- in preparing the lane change maneuver a gap between further road users (7) on the second lane (12) is searched for and a distance to the exit (15), from which the search is started, is adapted in dependence on the determined gradient.

2. The method according to claim 1,
**characterized in that**
a traffic density and/or a presence of trucks on the second lane (12) is determined and the preparation of the lane change maneuver is adapted in dependence on the traffic density and/or the presence of the trucks.

3. The method according to claim 1 or 2,
**characterized in that**
in preparing the lane change maneuver the speed of the vehicle (1) is reduced to a target speed, wherein the target speed and/or a distance to the exit, from which the target speed is reached, is adapted in dependence on the determined gradient.

4. The method according to claim 3,
**characterized in that**
the speed of the vehicle (1) is reduced in multiple stages and the stages are adapted in dependence on the determined gradient.

5. The method according to one of the preceding claims,
**characterized in that**
in preparing the lane change maneuver at least one indication is output to a user of the vehicle (1), wherein the output of the at least one indication is adapted to the determined gradient.

6. The method according to one of the preceding claims,
**characterized in that**
the preparation of the lane change maneuver is adapted in dependence on a known driving behavior of the user of the vehicle (1).

7. A driver assistance system (2) for a vehicle (1), wherein the driver assistance system (2) is configured to carry out a method according to one of the preceding claims.

8. A vehicle (1), in particular passenger car, comprising a driver assistance system (2) according to claim 7.

## Revendications

1. Procédé pour manœuvrer un véhicule (1) sur une route (11) à plusieurs voies avec les étapes:
• recevoir une commande de conduite pour manœuvrer le véhicule (1) d'une première voie de circulation (13) de la route (11) par une deuxième voie de circulation (12) de la route (11) vers une sortie (15) de la route (11),
• préparer une manœuvre de changement de voie de la première voie de circulation (13) vers la deuxième voie de circulation (12),
• dans lequel pour préparer la manœuvre de changement de voie une vitesse du véhicule (1) est adaptée,
• déterminer une pente de la route dans une région de la sortie (15) et
• adapter la préparation de la manœuvre de changement de voie en fonction de la pente déterminée,
**caractérisé en ce que**
• lors de la préparation de la manœuvre de changement de voie un intervalle entre d'autres usagers de la route (7) sur la deuxième voie de circulation (12) est recherché et une distance par rapport à la sortie (15), à partir de laquelle la recherche est démarrée, est adaptée en fonction de la pente déterminée.

2. Procédé selon la revendication 1, **caractérisé en ce que**
une densité de trafic et/ou une présence de camions sur la deuxième voie de circulation (12) est déterminée et la préparation de la manœuvre de changement de voie est adaptée en fonction de la densité de trafic et/ou de la présence des camions.

3. Procédé selon la revendication 1 ou 2, **caractérisé en ce que**
lors de la préparation de la manœuvre de changement de voie la vitesse du véhicule (1) est réduite à une vitesse cible, dans lequel la vitesse cible et/ou une distance par rapport à la sortie, à partir de laquelle la vitesse cible est atteinte, est adaptée en fonction de la pente déterminée.

4. Procédé selon la revendication 3, **caractérisé en ce que**
la vitesse du véhicule (1) est réduite en plusieurs étapes et les étapes sont adaptées en fonction de la pente déterminée.

5. Procédé selon l'une des revendications précédentes, **caractérisé en ce que**
lors de la préparation de la manœuvre de changement de voie au moins une indication est délivrée à un utilisateur du véhicule (1), dans lequel la délivrance de la au moins une indication est adaptée à la pente déterminée.

6. Procédé selon l'une des revendications précédentes, **caractérisé en ce que**
la préparation de la manœuvre de changement de voie est adaptée en fonction d'un comportement de conduite connu de l'utilisateur du véhicule (1).

7. Système d'assistance au conducteur (2) pour un véhicule (1), dans lequel le système d'assistance au conducteur (2) est configuré pour exécuter un procédé selon l'une des revendications précédentes.

8. Véhicule (1), en particulier voiture particulière, comprenant un système d'assistance au conducteur (2) selon la revendication 7.
